# FASCICULE DE BREVET EUROPEEN

(11) **EP 1 613 488 B1**
(45) Date de publication et mention de la délivrance du brevet: **16.07.2014**
(21) Numéro de dépôt: 04742450.2
(22) Date de dépôt: 07.04.2004
(51) Int. Cl.: B60C 23/04, B60C 25/132

(54) **PROCEDE ET DISPOSITIF POUR EFFECTUER UN TRAITEMENT SUR UN ENSEMBLE DE COMPOSANTS D'UNE ROUE DE VEHICULE**
VERFAHREN UND VORRICHTUNG ZUR BEHANDLUNG VON KOMPONENTEN EINES RADES
METHOD AND DEVICE FOR TREATING A SET OF COMPONENTS FOR THE WHEEL OF A VEHICLE

(30) Priorité: 16.04.2003 FR 0304739
(43) Date de publication de la demande: 11.01.2006
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: CORNIOT, Philippe, F-63530 Enval (FR)
(74) Mandataire: Dequire, Philippe Jean-Marie Denis
(86) Numéro de dépôt international: PCT/FR2004/000861
(87) Numéro de publication internationale: WO 2004/094168

(56) Documents cités:
- EP-A- 1 207 061
- US-A- 4 504 919
- US-B1- 6 234 232

## Description

La présente invention concerne un procédé pour effectuer un traitement sur un ensemble comportant au moins deux composants du groupe comprenant une jante, un pneumatique susceptible d'être monté sur ladite jante et un appui de sécurité destiné à supporter au moins partiellement une bande de roulement dudit pneumatique dans des conditions de pression réduite ou nulle. L'invention concerne également un dispositif et une machine pour la mise en oeuvre du procédé.

On connaît déjà des machines automatiques de montage/ démontage de pneumatiques, permettant d'effectuer aussi bien des opérations de montage d'un pneumatique et éventuellement d'un appui de sécurité sur une jante d'une roue de véhicule automobile, que des opérations d'enlèvement du pneumatique et, éventuellement, d'un appui de sécurité par rapport à la jante de la roue, en vue de la réparation ou du remplacement du pneumatique et, éventuellement, de l'appui de sécurité. Des machines de ce genre sont, par exemple, décrites dans les documents EP 1 177 920 et EP 1 253 026.

En fait, les machines connues de ce genre ne sont pas complètement automatiques. En effet, avant chaque opération de montage ou de démontage, l'opérateur affecté à la machine doit saisir manuellement, par exemple à l'aide d'un clavier, les informations concernant les divers composants de la roue, ou la roue elle-même, devant être montés ou démontés, en particulier les informations correspondant aux dimensions et au type de la roue, par exemple le diamètre intérieur du talon du pneumatique, le diamètre extérieur et la largeur B du pneumatique, le rapport H/B du pneumatique, le type de l'ensemble monté (conventionnel, PAX^{®} ou autoporteur souvent appelé ZP pour "Zero Pressure"), ou toutes autres informations vitales pour le réglage de la machine et/ou le traitement devant être ensuite effectué par la machine de montage/démontage de pneumatiques.

Une telle saisie manuelle des informations par un opérateur prend un certain temps, et malgré tout le soin qui est apporté à la saisie, celle-ci peut être une source d'erreur. En cas d'erreur de saisie, il peut en résulter une immobilisation de la machine de montage/démontage et/ou une immobilisation plus longue du véhicule du client et/ou des dégâts matériels sur la roue en cours de montage ou de démontage et/ou, plus grave encore, s'il se produit un défaut de montage et que celui-ci n'est pas détecté avant réutilisation de la roue, des accidents matériels et/ou corporels pendant la conduite du véhicule.

La présente invention a donc pour but de fournir un procédé pour effectuer un traitement, notamment, mais non exclusivement, une opération de montage ou de démontage d'un pneumatique sur ou à partir d'une jante d'une roue, ledit procédé pouvant être mis en oeuvre de manière automatique, sans qu'il soit nécessaire de saisir manuellement les informations indispensables pour effectuer le traitement désiré, donc en évitant les erreurs de saisie et leurs conséquences néfastes.

Par ailleurs, on connaît déjà des roues de véhicule automobile dont les composants, à savoir la jante, le pneumatique et un éventuel appui de sécurité comportent des éléments respectifs d'identification vérifiables automatiquement afin de permettre, après montage ou assemblage des composants en une roue de véhicule, un contrôle des composants pour vérifier qu'ils sont bien compatibles entre eux et pour engendrer, en cas d'incompatibilité, un signal d'alarme approprié (voir à cet égard la demande de brevet internationale publiée sous le n° WO 02/09957.

On connait aussi par les brevets EP 1 207 061, US 4 504 919 et US 6 234 232, des appareils d'assemblage de roues de véhicules commandés automatiquement à partir d'informations en mémoire d'ordinateur, ou détectées sur le pneumatique ou la jante.

On connaît aussi des roues de véhicule automobile dont la jante ou le pneumatique est muni d'un système de surveillance de pression, comportant un capteur de pression et/ou un détecteur de variation de pression, ainsi qu'un module de gestion susceptible de recevoir et de traiter des informations fournies par le capteur de pression et/ou le détecteur de variation de pression, et un module émetteur pour transmettre à un récepteur indépendant de la roue les informations analysées et traitées par le module de gestion (voir notamment les demandes internationales de brevet publiées sous les n° WO 02/34551, WO 02/34552 et WO 02/34553). Selon le cas, les informations transmises au récepteur sont utilisées pour avertir le conducteur d'une automobile d'une anomalie, comme par exemple une pression insuffisante à l'intérieur de la cavité du pneumatique, une crevaison, une perte rapide de pression, un éclatement, ou encore pour servir de paramètres pour in organe d'assistance à la conduite d'un véhicule, comme par exemple un dispositif du type ESP, un dispositif de type anti-blocage des freins (ABS) ou un dispositif de type anti-patinage.

Cependant, aucun des documents précités n'enseigne comment résoudre le problème technique qui est à la base de la présente invention, à savoir éviter les erreurs de saisie et leurs conséquences néfastes, dans un procédé et une machine pour effectuer un traitement sur un ensemble comportant au moins deux composants du groupe comprenant une jante, un pneumatique susceptible d'être monté sur ladite jante et un appui de sécurité destiné à supporter au moins partiellement une bande de roulement dudit pneumatique dans des conditions de pression réduite ou nulle.

A cet effet, la présente invention a pour objet un procédé du type défini en préambule, ledit procédé consistant :
a) à utiliser un ensemble dont au moins un desdits composants est muni d'un support d'information consultable automatiquement et apte à fournir, quand il est consulté, au moins une donnée utilisable pour effectuer un traitement désiré sur ledit ensemble ;
b) à amener ledit ensemble à une machine de traitement apte à effectuer ledit traitement désiré sur ledit ensemble sous la commande d'une unité programmable de gestion de données ;
c) à consulter automatiquement le support d'information d'au moins un des composants dudit ensemble amené à ladite machine de traitement et à transmettre automatiquement ladite au moins une donnée à ladite unité programmable de gestion de données ;
e) à lancer et exécuter ledit traitement désiré pour ledit ensemble à l'aide de ladite machine de traitement,
caractérisé en ce qu'il comprend, entre l'étape c) et l'étape e), une étape d) consistant à régler ladite machine de traitement sur la base de ladite au moins une donnée transmise, dans lequel
, l'étape b) consiste à amener ledit ensemble à une machine de gonflage de pneumatiques et à raccorder ladite machine à une valve de gonflage portée par un des composants dudit ensemble, et l'étape e) consiste à effectuer une opération de gonflage, dans lequel
dans l'étape c), on transmet automatiquement à ladite unité programmable de gestion de données une donnée permettant de définir une valeur de consigne pour la pression de gonflage du pneumatique, et dans lequel
dans l'étape a) on utilise un ensemble dont l'un desdits composants comporte un capteur de pression en relation, du point de vue fluidique, avec la cavité du pneumatique dans ledit ensemble à l'état assemblé, et dans l'étape c) on transmet en outre à ladite unité programmable de gestion de données la valeur réelle de la pression mesurée par le capteur de pression.

Dans l'étape c) la consultation du ou des supports d'information et la transmission de la ou des données entre le ou les supports d'information et la machine de traitement peuvent s'effectuer grâce à un dialogue par voie hertzienne.

A titre de variante, dans l'étape c), la consultation du ou des supports d'information et la transmission de la ou des données entre le ou les supports d'information et la machine de traitement peuvent s'effectuer grâce à une lecture optique.

La présente invention a également pour objet un système pour effectuer un traitement sur un ensemble comportant au moins deux composants du groupe comprenant une jante, un pneumatique susceptible d'être monté sur ladite jante et un appui de sécurité destiné à supporter au moins partiellement une bande de roulement dudit pneumatique dans des conditions de pression réduite ou nulle, ledit dispositif comprenant :
a) au moins un support d'information consultable automatiquement, porté par un desdits composants dudit ensemble et apte à fournir, quand il est consulté, au moins une donnée utilisable pour effectuer un traitement désiré sur ledit ensemble ;
b) au moins un moyen de consultation et de transmission apte à consulter automatiquement ledit support d'information et à transmettre automatiquement ladite au moins une donnée à une unité programmable de gestion de données ;
c) ladite unité programmable de gestion de donnée
d) une machine de traitement apte à effectuer ledit traitement désiré sur ledit ensemble sous la commande de ladite unité programmable de gestion de données, caractérisé en ce que
ladite machine de traitement est une machine de gonflage,
un desdits composants dudit ensemble portant un capteur de pression en relation, du point de vue fluidique, avec la cavité du pneumatique dans ledit ensemble à l'état assemblé,

Chaque composant dudit ensemble peut être muni d'un support d'information consultable automatiquement et apte à fournir, quand il est consulté, des données relatives au type et aux dimensions du composant correspondant dudit ensemble.

A titre de variante, chaque composant dudit ensemble peut être muni d'un support d'information consultable automatiquement et apte à fournir, quand il est consulté, une donnée d'identification relative au composant correspondant dudit ensemble.

Dans ce dernier cas, l'unité programmable de gestion de données comporte une mémoire contenant une table de correspondance comprenant les données d'identification de tous les composants susceptibles d'être assemblés dans un même ensemble et, pour chaque donnée d'identification, une pluralité de données relatives au type et aux dimensions du composant correspondant.

De préférence, ledit support d'information comporte une étiquette lisible par l'une des voies comprenant la voie électronique (hertzienne) et la voie optique.

Dans le premier cas, le moyen de consultation et de transmission comprend un premier émetteur/récepteur radio connecté à l'unité programmable de gestion de données, et un second émetteur/récepteur radio inclus dans ladite étiquette.

Dans le second cas, le moyen de consultation et de transmission comprend un lecteur optique apte à lire un code porté par ladite étiquette.

D'autres caractéristiques et avantages de l'invention apparaîtront au cours de la description suivante de quelques modes de réalisation de l'invention données à titre d'exemples en référence aux dessins annexés sur lesquels :
- la figure 1 illustre une représentation schématique d'un dispositif de traitement selon un premier mode de réalisation de l'invention ;
- la figure 2 est une vue en coupe transversale d'un ensemble monté, dont les composants sont munis de supports d'information ;
- la figure 3 illustre une représentation schématique d'un support d'information utilisable avec l'un quelconque des composants de l'ensemble montré sur la figure 2 et utilisable avec le dispositif de traitement représenté sur la figure 1 ;
- la figure 4 est une vue semblable à la figure 3, illustrant de manière schématique un support d'information évolué ;
- la figure 5 illustre une représentation schématique d'un dispositif de traitement selon une variante de réalisation de l'invention ;
- la figure 6 illustre une représentation schématique d'un support d'information utilisable pour n'importe lequel des composants de l'ensemble montré sur la figure 2 et utilisable avec le dispositif de traitement représenté sur la figure 5 ;
- la figure 7 illustre une représentation schématique d'un dispositif de traitement selon un deuxième mode de réalisation de l'invention.

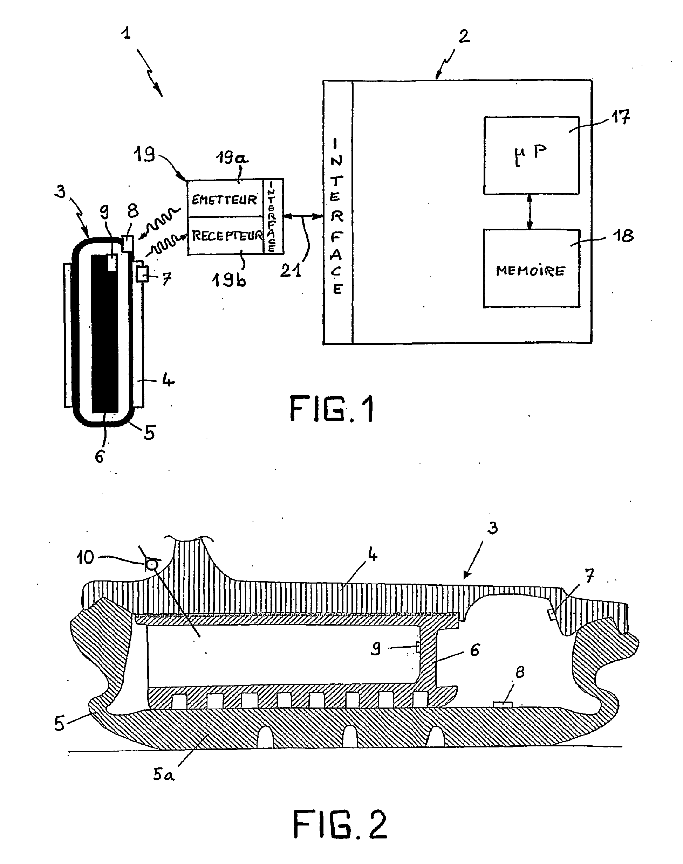

En se reportant tout d'abord à la figure 1, on peut voir un dispositif de traitement 1 utilisable pour la mise en oeuvre du procédé de l'invention. Le dispositif de traitement 1 comprend une machine de traitement 2, par exemple une machine automatique de montage/démontage de pneumatiques apte à effectuer un traitement désiré sur un ensemble multicomposant 3, par exemple une roue de véhicule automobile, comprenant une jante 4, un pneumatique 5 et éventuellement un appui de sécurité 6 destiné à permettre un roulage temporaire d'un véhicule équipé d'une telle roue lors d'une chute de pression partielle ou totale à l'intérieur de la cavité du pneumatique 5 de ladite roue.

La figure 2 illustre, en coupe transversale, un ensemble monté ou roue 3 de type connu, dans un état de roulage à plat, c'est-à-dire dans un état dégonflé du pneumatique 5.

Dans le dispositif de traitement selon ce premier mode de réalisation de l'invention, chacun des composants 4, 5 et 6 de la roue 3 comporte, de façon connue en soi, un support d'information 7, 8 ou 9, respectivement. Cependant, ici, chaque support d'information 7, 8 ou 9 porte ou contient au moins une donnée utilisable pour effectuer un traitement désiré sur la roue 3, en particulier des données indispensables pour effectuer un réglage préalable de la machine de montage/démontage 2 avant une opération de démontage ou une opération de montage sur la roue 3.

La figure 2 montre un exemple connu d'implantation des supports d'information 7, 8 et 9 dans une roue 3. Dans l'exemple représenté sur la figure 2, les supports d'information 7, 8 et 9 sont disposés contre une paroi du composant correspondant et maintenus par exemple par collage. Par exemple, le support d'information 8 associé au pneumatique 5 est disposé contre la face intérieure de la bande de roulement 5a du pneumatique 5 et fixé à la bande de roulement par collage. Selon un autre exemple (non montré), les supports d'information 7, 8 et 9 peuvent être intégrés ou noyés, de façon connue, dans l'une ou l'autre des parois du composant correspondant 4, 5 ou 6. Sur la figure 2, on a également montré, de façon très schématique, une valve de gonflage 10 en communication fluidique avec la cavité interne du pneumatique 5.

Les supports d'information 7, 8 et 9 peuvent prendre une multiplicité de formes, comme par exemple une étiquette électronique telle un transpondeur, un élément de mémoire de type ROM ou RAM, etc.

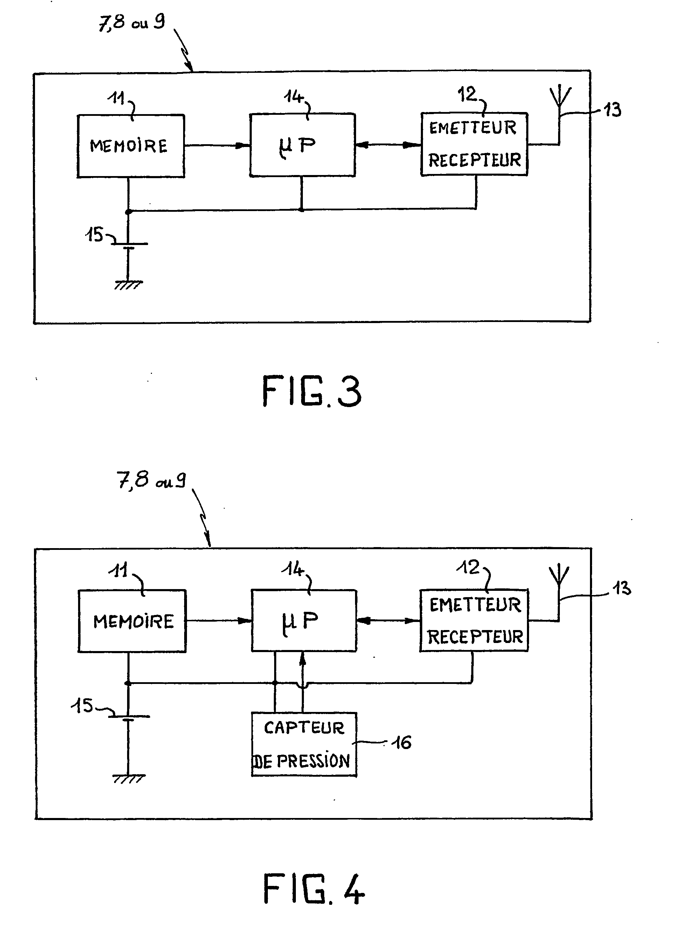

La figure 3 montre, de manière schématique, un exemple d'étiquette électronique susceptible d'être utilisée pour former le support d'information 7, 8 ou 9. Comme montré dans la figure 3, l'étiquette électronique comporte une mémoire 11 contenant la ou les données devant être transmises à la machine de montage/démontage 2, un émetteur/récepteur 12 apte à établir, via une éventuelle antenne 13, une communication bidirectionnelle sans fil avec ladite machine de montage/ démontage 2, et un microprocesseur 14 apte à gérer le fonctionnement de la mémoire 11 et de la section émettrice de l'émetteur/récepteur 12 quand la section réceptrice de celui-ci reçoit un signal d'interrogation ou de stimulation en provenance de la machine de montage/démontage 2. Une pile ou une batterie 15 peut être prévue pour fourni l'énergie électrique nécessaire au fonctionnement de la mémoire 11, de l'émetteur/récepteur 12 et du microprocesseur 14. Toutefois, la présence de la batterie 15 n'est pas absolument nécessaire lorsque l'on utilise un simple transpondeur et une mémoire fixe contenant un code unique, car dans ce cas, l'énergie nécessaire pour le fonctionnement de l'étiquette électronique peut être prélevée sur le signal d'interrogation ou de stimulation reçu par l'étiquette électronique en provenance de la machine de montage/ démontage.

La figure 4 montre, de façon schématique, une étiquette électronique plus évoluée que celle de la figure 3, qui est également utilisable pour former l'un ou l'autre des supports d'information 7, 8 ou 9, dans le cas où l'étiquette électronique doit être aussi capable de fournir une indication sur la valeur de la pression à l'intérieur de la cavité du pneumatique 5 de la roue 3. Dans l'étiquette électronique de la figure 4, les éléments qui sont identiques ou qui jouent le même rôle que ceux de l'étiquette électronique de la figure 3 sont désignés par les mêmes numéros de référence et ne seront pas décrits à nouveau en détail. L'étiquette électronique de la figure 4 diffère de celle de la figure 3 en ce qu'elle comprend en outre un capteur de pression 16 apte à mesurer la pression dans la cavité du pneumatique 5. De façon connue, on utilise de préférence comme capteur de pression 16 un capteur ne nécessitant pas d'alimentation, comme par exemple un capteur de type piézo-électrique, afin d'économiser l'énergie de la pile ou batterie 15. Ceci permet d'augmenter la durée de vie de la pile ou batterie 15 de telle sorte qu'elle puisse correspondre, dans la mesure du possible, à celle du pneumatique 5 de la roue 3 ou du véhicule équipé de ladite roue. Ainsi, en plus de sa fonction de support d'information pour la mise en oeuvre du procédé de l'invention, l'étiquette électronique peut aussi être utilisée avantageusement dans le cas où la roue ou le véhicule est équipé d'un système permettant la surveillance de la pression des pneumatiques à l'arrêt comme pendant le roulage.

La machine automatique de montage/démontage 2 comporte plusieurs organes fonctionnels, comme par exemple un plateau tournant muni d'organes de préhension, de centrage, de serrage et/ou de blocage de jante de pneumatique, un chargeur de roue, de jante ou de pneumatique apte à charger une roue complète ou une jante de roue sur ledit plateau tournant selon qu'il s'agit d'effectuer une opération de démontage ou une opération de montage, au moins un bras mobile muni d'une tête porte-outil à son extrémité libre, un outil de démontage de pneumatique attaché à ladite tête porte-outil, un outil de montage de pneumatique, qui est attaché aussi à ladite tête porte-outil ou qui est attaché à une autre tête porte-outil d'un autre bras mobile, etc. Tous les organes fonctionnels peuvent prendre diverses formes bien connues, et ils n'ont donc pas été représentés dans la figure 1 dans la mesure où ils ne sont pas indispensables pour la compréhension de l'invention. Pour plus de détails, il est possible de se référer aux nombreux documents de la littérature décrivant des machines de ce genre, par exemple les documents EP 1 177 920 et 1 157 860 déjà mentionnés plus haut, ou encore le document EP 1 253 026, qui décrit un chargeur de roue pour ce genre de machine.

Revenant à la figure 1, on peut voir que la machine automatique de montage/démontage de pneumatiques comporte, de façon connue, une unité programmable de gestion de données 17, par exemple un microprocesseur, et une mémoire 18, qui peut être une mémoire interne du microprocesseur 17 ou une mémoire externe connectée au microprocesseur. Le microprocesseur 17 est conçu, de façon connue, pour régler les divers organes fonctionnels de la machine 2 avant chaque opération de montage ou de démontage d'un pneumatique sur la base de données qui sont introduites dans la mémoire 18 et qui sont relatives au type et aux dimensions d'une roue de véhicule ou des composants d'une roue de véhicule sur laquelle doivent être effectuées des opérations de démontage et/ou de montage de pneumatique, par exemple pour réparer un pneumatique crevé ou pour remplacer un pneumatique usé ou éclaté par un pneumatique neuf et, éventuellement aussi, pour remplacer un appui de sécurité endommagé par un appui de sécurité neuf. Le microprocesseur 17 est également conçu, de façon connue, pour gérer ensuite le fonctionnement des organes fonctionnels de la machine 2 pendant les opérations de démontage et/ou de montage proprement dites, sur la base d'un programme stocké dans la mémoire 18. Habituellement, comme indiqué en préambule, les données indispensables au réglage préalable des organes fonctionnels de la machine 2 en vue de l'adapter à chaque roue devant être montée ou démontée sont saisies manuellement par un opérateur affecté à la machine 2 à l'aide d'un clavier, en vue d'être entrées dans la mémoire 18.

Dans le dispositif de traitement 1 selon l'invention, la machine automatique de montage/démontage de pneumatiques comprend, à la place du clavier susmentionné ou en plus de celui-ci, au moins un émetteur/récepteur 19 qui est relié au microprocesseur 17 par une liaison appropriée 21, par exemple une liaison série de type RS 232 ou une liaison de type CAN ou autre réseau de terrain. L'émetteur/récepteur 19 est conçu pour pouvoir établir une communication bidirectionnelle sans fil avec l'émetteur/récepteur 12 de l'étiquette électronique 7, 8 ou 9 de la figure 3 ou 4. Par exemple, la section émettrice 19a de l'émetteur/ récepteur 19 peut être conçue pour émettre un signal d'interrogation ou de stimulation à une fréquence de 125 Khz pendant une durée de 2 à 3 secondes chaque fois qu'une roue 3 ou un composant de la roue 3 est chargé dans la machine 2. Par exemple, dans le cas où la machine 2 est équipée d'un chargeur automatique, l'émetteur/récepteur 19 peut être installé sur le chargeur automatique et ce dernier peut comporter en outre un commutateur approprié, par exemple un commutateur électromécanique ou un commutateur opto-électronique, un détecteur de proximité ou tout autre capteur sensible à la présence d'une roue ou d'un composant de roue sur le chargeur et apte à produire un signal utilisable pour déclencher l'émission dudit signal d'interrogation ou de stimulation par la section émettrice 19a de l'émetteur/récepteur 19 chaque fois que ledit commutateur, détecteur ou autre capteur est activé par une roue 3 ou un composant de la roue 3 placé sur le chargeur.

Quand la section réceptrice de l'émetteur/récepteur 12 de l'étiquette électronique 7, 8 ou 9 reçoit le signal d'interrogation ou de stimulation émis par l'émetteur/récepteur 19, elle excite le microprocesseur 14 qui va chercher la ou les données contenues dans la mémoire 11 et transmet lesdites données, via la section émettrice de l'émetteur/récepteur 12 vers la section réceptrice 19b de l'émetteur/ récepteur 19, par exemple sous la forme d'un signal codé à une fréquence de 433 Mhz.

Dans le cas où chacun des composants 4, 5 et 6 de la roue 3 comporte un support d'information 7, 8 ou 9 tel que l'étiquette électronique représentée sur la figure 3, la mémoire 11 de chaque étiquette électronique peut contenir une ou plusieurs données relatives au type et aux dimensions du composant 4, 5 ou 6 correspondant. Dans ce cas, le signal codé de réponse envoyé par la section émettrice de l'émetteur/récepteur 12 de chaque étiquette électronique 7, 8 ou 9 contiendra un seul code ou une trame de codes selon que la mémoire 11 contient une seule ou plusieurs données.

A titre de variante, la mémoire 11 de chaque étiquette électronique 7, 8 ou 9 peut contenir une donnée d'identification propre à identifier le composant 4, 5 ou 6 correspondant. Dans ce cas, le signal codé de réponse envoyé par la section émettrice de l'émetteur/récepteur 12 de chaque étiquette électronique 7, 8 ou 9 ne contient qu'un seul code.

Dans tous les cas, le signal codé de réponse peut être calé sur une fréquence particulière, proche de 433 Mhz, mais différente pour chaque étiquette, et l'émetteur/récepteur 19, du côté de la machine 2 comporte une section réceptrice 19b à large bande, apte à recevoir toutes les fréquences susceptibles d'être émises par les étiquettes électroniques 7, 8 et 9.

En outre, le signal d'interrogation ou de stimulation émis par la section émettrice de l'émetteur/récepteur 19 et les signaux codés de réponse envoyés par la section émettrice de l'émetteur/récepteur 12 de chaque étiquette électronique 7, 8 ou 9 sont synchronisés ; c'est-à-dire que les signaux codés de réponse sont émis dans une fenêtre temporelle de durée prédéfinie après l'émission du signal d'interrogation ou de stimulation. Ainsi, le microprocesseur 17 de la machine 2 est capable de rejeter tout signal parasite non reçu dans la fenêtre temporelle.

Les signaux codés de réponse reçus par l'émetteur/récepteur 19 et transmis au microprocesseur 17 de la machine 2 sont stockés dans la mémoire 18.

Dans le cas où chacun des signaux codés de réponse envoyés par les étiquettes électroniques 7, 8 et 9 contient seulement un code identifiant le composant 4, 5 ou 6 correspondant, la mémoire 18 associée au microprocesseur 17 ou incluse dans celui-ci doit contenir une table de correspondance contenant les données d'identification de tous les composants susceptibles d'être assemblés dans un même ensemble, et, pour chaque donnée d'identification, une pluralité de données relatives au type et aux dimensions du composant correspondant. Ainsi, si à un moment donné l'opération à effectuer par la machine 2 est une opération de montage d'un pneumatique sur une jante, le microprocesseur 17 est en mesure de vérifier si les composants chargés dans la machine sont compatibles entre eux et, en cas d'incompatibilité, il peut commander l'émission d'un message d'erreur approprié sur un afficheur et/ou l'émission d'un signal d'alarme approprié, par exemple un signal sonore et/ou un signal lumineux.

Lorsque le microprocesseur 17 ne détecte aucune anomalie ou incompatibilité, il peut ensuite commander les réglages de la machine 2 sur la base des données relatives au type et aux dimensions des composants, données qui ont été soit transmises automatiquement par les étiquettes électroniques 7, 8 et 9 à la machine 2, soit retrouvées par le microprocesseur 17 dans la mémoire 18 à l'aide des données reçues d'identification des composants et à l'aide de la table de correspondance contenue dans ladite mémoire. Les opérations de réglage et les opérations de montage ou de démontage d'un pneumatique peuvent ensuite être commandées par le microprocesseur 17 et exécutées comme dans une machine automatique classique de montage/démontage de pneumatiques.

Par exemple, pour une opération de démontage d'une roue 3 équipée d'un pneumatique 5 conventionnel, les roulettes de pression et le levier extracteur (outils de montage/démontage) sont tout d'abord amenés à une distance du centre du plateau tournant de la machine 2 supérieure au diamètre extérieur du pneumatique 5 pour permettre la mise en place et la fixation de la roue 3 sur ledit plateau tournant. Ensuite, après fixation de la roue 3 sur le plateau tournant, les roulettes de pression sont écartées verticalement l'une de l'autre, si nécessaire, de telle sorte que l'espacement entre les roulettes soit un peu plus grand que la largeur du pneumatique 5, puis les roulettes et le levier extracteur sont amenés à une distance du centre du plateau tournant correspondant au diamètre intérieur du talon du pneumatique. Après cela, l'opération de démontage proprement dite peut commencer.

Il est important que la machine 2 puisse connaître le type du pneumatique (par exemple : conventionnel ou PAX) de la roue qui est mise en place sur la machine, car les outils utilisés et le déroulement des opérations ne sont pas les mêmes dans tous les cas. Grâce à l'invention, la machine 2 peut être renseignée automatiquement sur le type du pneumatique équipant la roue qui a été installée sur le plateau tournant de la machine. Si la machine est conçue pour pouvoir traiter plusieurs type de pneumatiques, elle choisira alors automatiquement les outils appropriés pour traiter la roue qui a été installée sur le plateau tournant ou, dans une version moins sophistiquée, elle demandera à l'opérateur de monter les outils appropriés sur la ou les têtes porte-outil de la machine. Si la machine est conçue pour ne traiter automatiquement qu'un seul type de pneumatique, grâce à la connaissance du type du pneumatique de la roue qui a été installée sur la machine, celle-ci sera alors apte à détecter si elle est capable de traiter ladite roue et, selon le cas, à effectuer les réglages nécessaires et à effectuer ensuite le traitement désiré, ou à refuser d'effectuer le traitement en produisant par exemple un signal d'alarme ou en affichant un message d'erreur indiquant que la roue installée sur la machine ne peut pas être traitée.

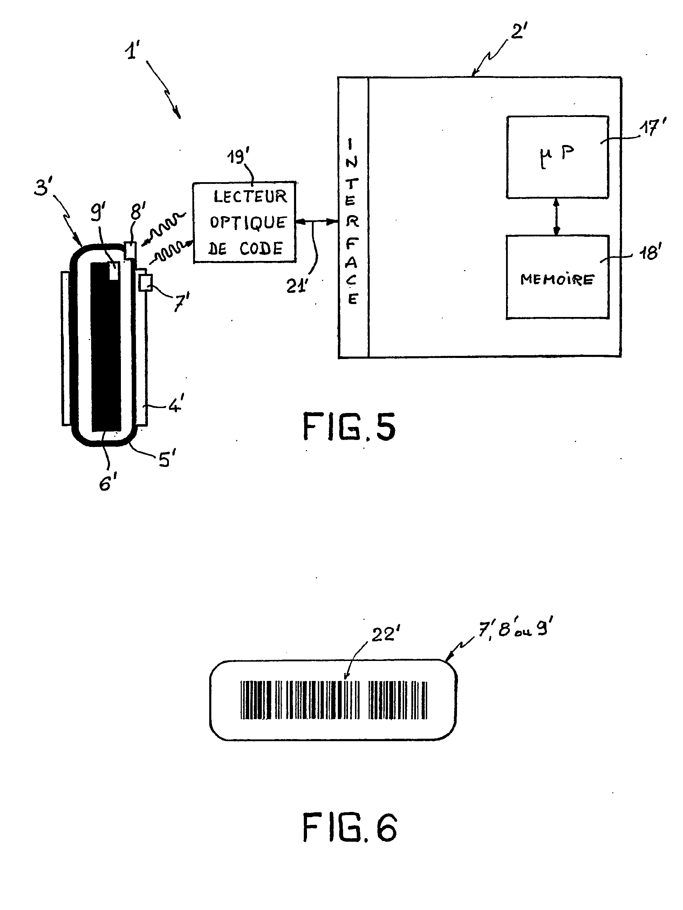

La figure 5 illustre une représentation schématique d'une variante de réalisation d'une machine automatique de montage/ démontage de pneumatiques. Dans la figure 5, les éléments qui sont identiques ou qui jouent le même rôle que ceux du mode de réalisation de la figure 1 sont désignés par les mêmes numéros de référence affectés du signe " ' " et ne seront pas décrits à nouveau en détail. La machine 2' de la figure 5 diffère de la machine 2 de la figure 1 en ce que l'émetteur/ récepteur 19 est ici remplacé par un lecteur optique 19'. Dans ce cas, chacun des supports d'information 7', 8' et 9' porté respectivement par la jante 4', le pneumatique 5' et l'éventuel appui de sécurité 6' est constitué par une étiquette portant un code approprié, lisible optiquement, par exemple à code à barres 22' comme montré dans la figure 6.

Bien entendu, dans cette variante de réalisation, les étiquettes 7', 8' et 9' doivent être collées, imprimées ou autrement façonnées sur une face externe du composant 4', 5' ou 6' correspondant, de façon à être facilement lisible par le lecteur optique 19'.

De préférence, le code 22' porté par chaque étiquette 7', 8' ou 9' est un code identifiant le composant 4', 5' ou 6' correspondant, et la mémoire 18' associée au microprocesseur 17' ou incluse dans celui-ci contient une table de correspondance, d'une façon semblable au cas décrit plus haut où la mémoire 11 de l'étiquette électronique 7, 8 ou 9 contient une donnée d'identification.

Là encore, les données ou les codes lus sur les étiquettes 7', 8' ou 9' par le lecteur optique 19' sont transmis, sans erreur de saisie, au microprocesseur 17' qui peut ensuite, sur la base des données ou des codes reçus par lui, commander les réglages appropriés de la machine 2' pour l'adapter aux composants 4', 5' et 6' de la roue 3' amenée à ladite machine.

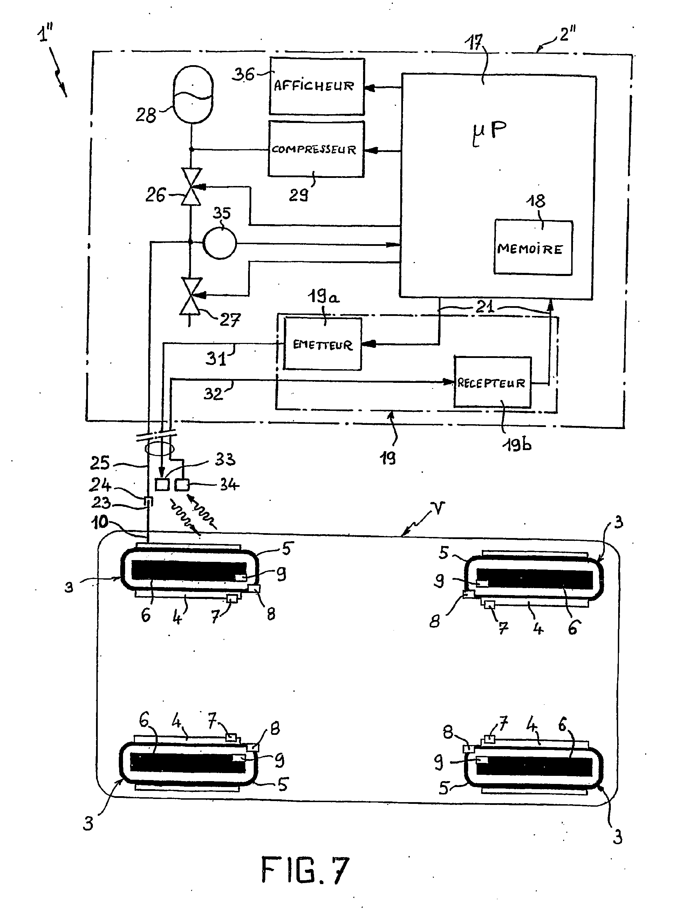

La figure 7 illustre une représentation schématique d'un second mode de réalisation d'un dispositif de traitement 1" qui met ici en oeuvre une machine 2" de gonflage de pneumatiques. Dans la figure 7, les éléments qui sont identiques ou qui jouent le même rôle que ceux du mode de réalisation de la figure 1 sont désignés par les mêmes numéros de référence et ne seront pas décrits à nouveau en détail.

Sur la figure 7, on a également représenté de manière schématique un véhicule V avec ses quatre roues 3, chaque roue 3 ayant par exemple une structure telle que celle qui est partiellement montrée en coupe sur la figure 2. L'une des roues 3 du véhicule V est représentée avec une valve 10 exagérément allongée pour la commodité du dessin, ladite valve 10 comportant un raccord mâle 23 raccordé à un raccord femelle 24 à une extrémité d'un tuyau souple 25 d'alimentation en air comprimé provenant de la machine de gonflage 2".

Dans la machine de gonflage 2", l'autre extrémité du tuyau souple 25 est raccordée d'une part à la sortie d'une électrovalve de gonflage 26 et d'autre part à l'entrée d'une électrovalve de dégonflage 27 dont la sortie est à l'atmosphère. L'entrée de l'électrovalve de gonflage 26 est elle-même reliée d'une part à un accumulateur de pression 28 et d'autre part à la sortie d'un compresseur d'un groupe motocompresseur 29. A l'accumulateur de pression 28 peut être associé un capteur de pression (non montré) dont le signal de sortie est envoyé au microprocesseur 17. Dans ce cas, un programme contenu dans la mémoire 18 du microprocesseur 17 peut être prévu pour comparer la valeur de la pression dans l'accumulateur de pression 28, mesurée par le capteur de pression susmentionné, à deux valeurs de seuil, respectivement inférieure et supérieure, afin de mettre en marche le groupe motocompresseur 29 quand la valeur mesurée de la pression tombe au-dessous de la valeur de seuil inférieure, et pour arrêter le groupe motocompresseur 29 quand la valeur mesurée de la pression atteint la valeur de seuil supérieure.

A titre de variante, à la place du capteur de pression susmentionné, il est possible d'associer à l'accumulateur de pression 28 un pressostat à deux seuils de pression, qui met en marche le groupe motocompresseur lorsque la pression dans l'accumulateur de pression 28 tombe au-dessous d'une valeur de seuil inférieure, et arrête ledit groupe motocompresseur quand la pression dans l'accumulateur 28 atteint une valeur de seuil supérieure.

Comme dans le mode de réalisation de la figure 1, la machine de gonflage 2" comporte un émetteur/récepteur 19 apte à émettre un signal d'interrogation ou de stimulation vers les supports d'information 4, 5 et 6 de la roue 3 du véhicule V dont la valve 10 est raccordée au tuyau souple 25 et à recevoir les signaux codés renvoyés par les supports d'information 4, 5 et 6, qui sont par exemple constitués par des étiquettes électroniques semblables à celles montrées dans la figure 3 ou dans la figure 4.

Toutefois, dans ce cas, la mémoire 11 de l'étiquette électronique associée à la jante 4 ou au pneumatique 5 contient, à la place ou en plus des données relatives au type et aux dimensions du composant 4 ou 5 correspondant, une donnée permettant de définir une valeur de consigne pour la pression de gonflage du pneumatique 5 de la roue 3 correspondante. Dans le cas où la mémoire 18 contient une table de correspondance, il n'est pas absolument indispensable que la mémoire 11 de l'étiquette électronique 7 ou 8 associée à la jante 4 ou au pneumatique 5 contienne une valeur de consigne pour la pression de gonflage du pneumatique correspondant. En effet, dans ce cas, il suffit que la mémoire 11 contienne une donnée d'identification et que la table de correspondance contenue dans la mémoire 18 comprenne, pour chaque donnée d'identification, une valeur de consigne ou une donnée permettant de définir une valeur de consigne pour la pression de gonflage du pneumatique 5 associé à la jante 4 qui ont été identifiés au moyen des données d'identification contenues dans la mémoire 11 des étiquettes électroniques 7 et 8.

De préférence, la section émettrice 19a et la section réceptrice 19b de l'émetteur/récepteur 19 de la machine de gonflage 2" sont reliées respectivement par des câbles souples 31 et 32 à des antennes 33 et 34 situées à proximité du raccord femelle 24 du tuyau souple 25. Les câbles 31 et 32 peuvent être liés ou intégrés au tuyau souple 25, au moins dans sa partie qui se trouve à l'extérieur de la machine de gonflage 2", afin de ne former qu'un seul élément allongé flexible avec ledit tuyau. Dans ces conditions, en utilisant des émetteurs/récepteurs 12 et 19 à faible portée, par exemple inférieure à 1 mètre, on peut faire en sorte que l'émetteur/récepteur 19 de la machine de gonflage 2" recevra uniquement la ou les données contenues dans les étiquettes électroniques 7, 8 et 9 des composants 4, 5 et 6 de la roue 3 dont la valve 10 est raccordée au tuyau souple 25.

La machine de gonflage 2" peut en outre comporter un capteur de pression 35 raccordé, du point de vue fluidique, au tuyau souple 25 et connecté électriquement au microprocesseur 17. Lorsque le tuyau souple 25 est raccordé à la valve 10 d'une roue 3, le capteur de pression mesure la valeur réelle de la pression dans la cavité intérieure du pneumatique 5 de la roue 3 et fournit au microprocesseur 17 un signal indicatif de ladite valeur réelle de la pression. De préférence, un afficheur 36 est également connecté au microprocesseur 17, par exemple pour afficher la valeur réelle de la pression mesurée par le capteur de pression 35 ou par le capteur de pression 16 (figure 4) si l'étiquette électronique 7 ou 8 associée à la jante 4 ou au pneumatique 5 de la roue 3 dont la valve 10 est raccordée au tuyau souple 25 comporte un tel capteur de pression.

Un cycle de gonflage peut être initialisé de différentes manières. Par exemple, le programme contenu dans la mémoire 18 du microprocesseur 17 peut être conçu de telle sorte que, lorsque la machine 2" est en veille, le microprocesseur 17 excite l'émetteur/récepteur 19 à intervalles réguliers, par exemple toutes les 10 secondes, afin que sa section émettrice 19a émette un signal d'interrogation ou de stimulation pendant 2 à 3 secondes. Si, à ce moment le tuyau souple 25 a déjà été raccordé à la valve 10 d'une roue 3 et si la section réceptrice 19b de l'émetteur/récepteur 19 reçoit un signal codé de réponse en provenance des étiquettes électronique 7, 8 et 9 de ladite roue 3 dans une fenêtre temporelle de durée prédéfinie à la suite de l'émission du signal d'interrogation ou de stimulation, un cycle de gonflage est initialisé.

A titre de variante, la section émettrice 19a de l'émetteur/ récepteur 19 pourrait être agencée pour émettre le signal d'interrogation ou de stimulation vers les étiquettes électroniques 7, 8 et 9 seulement en réponse à la réception par le microprocesseur 17 d'un signal indicatif de pression engendré par le capteur de pression 35 lorsque le tuyau souple 25 est raccordé à la valve 10, ou encore, si le pneumatique 5 est complètement dégonflé, en réponse à l'enfoncement d'un bouton poussoir de démarrage (non montré) par un utilisateur de la machine de gonflage 2".

Dans tous les cas, l'initialisation d'une opération de gonflage commence par une opération de réglage de la machine de gonflage 2". Cette opération de réglage consiste à charger dans la mémoire 18 ou dans une autre mémoire de travail une valeur de consigne pour le gonflage du pneumatique 5 de la roue dont la valve 10 est raccordée au tuyau souple 25. Comme indiqué précédemment, cette valeur de consigne peut être obtenue directement et automatiquement à partir de la mémoire 11 de l'étiquette électronique 7 ou 8 ou elle peut être obtenue à partir d'une table de correspondance contenue dans la mémoire 18 sur la base des données d'identification envoyées au microprocesseur 17 par l'étiquette électronique 7 ou 8. Dans une version encore plus sophistiquée, la valeur de consigne pourrait être calculée par le microprocesseur 17 à partir de l'une ou l'autre des données ci-dessus et à partir de données supplémentaires comme par exemple la température du pneumatique 5 à gonfler (la valeur de cette température pouvant être par exemple fournie par un capteur de température intégré à l'étiquette électronique 8 associée au pneumatique 5 et transmise au microprocesseur 17 par l'émetteur/récepteur 12 conjointement avec les données contenues dans la mémoire 11 de cette étiquette), une information indiquant s'il s'agit d'une roue avant ou d'une roue arrière (cette information peut être fournie par des transpondeurs fixés à des endroits appropriés sur le véhicule V et aptes à réagir au signal d'interrogation ou de stimulation émis par la section émettrice 19a de l'émetteur/récepteur 19), une information indiquant si le véhicule est faiblement chargé, moyennement chargé ou fortement chargé, ou d'autres informations encore.

Une fois que la valeur de consigne pour la pression de gonflage de la roue 3 a été stockée dans une mémoire appropriée du microprocesseur 17, le programme lance alors l'opération de gonflage proprement dite.

Le microprocesseur 17 commence par vérifier si la valeur réelle de la pression dans la cavité du pneumatique 5, mesurée par le capteur de pression 35 ou 16, est inférieure à la valeur de consigne ou si elle est supérieure à ladite valeur de consigne. Si le pneumatique 5 est sous-gonflé, le microprocesseur 17 commande alors, par l'intermédiaire d'un circuit de commande de puissance (non montré), l'ouverture de l'électrovalve 26 afin de gonfler le pneumatique 5. L'opération de gonflage se poursuit jusqu'au moment où la valeur réelle de la pression mesurée par le capteur de pression 35 ou 16 atteint la valeur de consigne. A ce moment, le microprocesseur 17 provoque la fermeture de l'électrovalve 26 et l'émission d'un signal sonore et/ou lumineux avertissant l'utilisateur de la machine de gonflage 2" que l'opération de gonflage du pneumatique 5 est terminée.

Inversement, si le pneumatique 5 est trop gonflé, le microprocesseur 17 commande alors, par l'intermédiaire d'un autre circuit de commande de puissance (non montré), l'ouverture de l'électrovalve 27 afin de dégonfler le pneumatique 5. L'opération de dégonflage se poursuit jusqu'au moment où la valeur réelle de la pression mesurée par le capteur de pression 35 ou 16 atteint la valeur de consigne. A ce moment, le microprocesseur provoque la fermeture de l'électrovalve 27 et l'émission du signal sonore et/ou lumineux avertissant l'utilisateur que l'opération de gonflage est terminée.

L'emplacement de l'émetteur/récepteur 19 ou du lecteur optique 19' n'est pas limité à l'emplacement indiqué plus haut dans la description, car il peut être disposé en divers autres endroits de la machine automatique de montage/démontage de pneumatiques 2 ou 2'. De même, il est aussi possible de prévoir une pluralité d'émetteurs/ récepteurs 19 disposés respectivement dans des endroits différents de la machine 2 ou 2', par exemple chacun à côté d'un organe fonctionnel de la machine devant être réglé préalablement à chaque opération de démontage et/ou montage en fonction du type et/ou des dimensions des composants de la roue. Chaque émetteur/récepteur 19 ou chaque lecteur optique 19' peut être conçu pour transmettre au microprocesseur 17 ou 17' l'ensemble des données contenues dans les supports d'information 7, 8 et 9 ou 7', 8' et 9'. A titre de variante, chaque émetteur/récepteur 19 ou chaque lecteur optique 19' peut être conçu pour transmettre au microprocesseur 17 seulement des données spécifiques particulières pour régler le ou les organes fonctionnels situés à proximité immédiate de l'émetteur/récepteur 19 ou du lecteur optique 19' concerné.

Dans le cas où on utilise un lecteur optique, comme le lecteur optique 19', à titre de moyen de consultation et de transmission, il n'est pas indispensable que celui-ci soit installé à un endroit fixe de la machine. Au lieu de cela, on peut bien entendu utiliser un lecteur optique relié par un câble souple à la machine 2" de façon à pouvoir être manipulé par un opérateur, par exemple pour pouvoir être amené chaque fois en contact ou à proximité immédiate d'une étiquette portée par l'un des composants 4, 5 et 6 de la roue 3.

En outre, bien que la machine de gonflage 2" ait été décrite plus haut comme une machine individuelle, c'est-à-dire comme une machine susceptible d'être utilisée en tant que station de gonflage, il est bien évident que la machine de gonflage pourrait être associée ou combinée à une machine automatique de montage/démontage de pneumatiques comme la machine 2 de la figure 1, le microprocesseur 17, la mémoire 18 et l'émetteur/récepteur 19 pouvant être communs aux deux machines.

## Revendications

1. Procédé pour effectuer un traitement sur un ensemble (3) comportant au moins deux composants du groupe comprenant une jante (4), un pneumatique (5) susceptible d'être monté sur ladite jante et un appui de sécurité (6) destiné à supporter au moins partiellement une bande de roulement (5a) dudit pneumatique dans des conditions de pression réduite ou nulle, ledit procédé consistant :
a) à utiliser un ensemble (3) dont au moins un desdits composants (4, 5 ou 6) est muni d'un support d'information (7, 8 ou 9) consultable automatiquement et apte à fournir, quand il est consulté, au moins une donnée utilisable pour effectuer un traitement désiré sur ledit ensemble ;
b) à amener ledit ensemble (3) à une machine de traitement (2) apte à effectuer ledit traitement désiré sur ledit ensemble sous la commande d'une unité programmable de gestion de données (17) ;
c) à consulter automatiquement le support d'information (7, 8 ou 9) d'au moins un des composants (4, 5 ou 6) dudit ensemble (3) amené à ladite machine de traitement (2) et à transmettre automatiquement ladite au moins une donnée à ladite unité programmable de gestion de données (17) ;
e) à lancer et exécuter ledit traitement désiré pour ledit ensemble (3) à l'aide de ladite machine de traitement (2),
ledit procédé étant **caractérisé par le fait qu'**il comprend, entre l'étape c) et l'étape e), une étape d) consistant à régler ladite machine de traitement (2) sur la base de ladite au moins une donnée transmise,
dans lequel l'étape b) consiste à amener ledit ensemble (3) à une machine (2") de gonflage de pneumatiques et à raccorder ladite machine à une valve de gonflage (10) portée par un des composants dudit ensemble, et l'étape e) consiste à effectuer une opération de gonflage,
dans lequel dans l'étape c), on transmet automatiquement à ladite unité programmable de gestion de données (17) une donnée permettant de définir une valeur de consigne pour la pression de gonflage du pneumatique (5),
et dans lequel dans l'étape a) on utilise un ensemble (3) dont l'un desdits composants (4, 5 ou 6) comporte un capteur de pression (16) en relation, du point de vue fluidique, avec la cavité du pneumatique (5) dans ledit ensemble (3) à l'état assemblé, et dans l'étape c) on transmet en outre à ladite unité programmable de gestion de données (17) la valeur réelle de la pression mesurée par le capteur de pression (16).

2. Procédé selon la revendication 1, **caractérisé en ce que** dans l'étape c) la consultation du support d'information (7, 8 ou 9) et la transmission de ladite au moins une donnée s'effectuent grâce à un dialogue par voie hertzienne.

3. Procédé selon la revendication 1, **caractérisé en ce que** dans l'étape c) la consultation du support d'information (7, 8 ou 9) et la transmission de ladite au moins une donnée s'effectuent grâce à une lecture optique.

4. Système pour effectuer un traitement sur un ensemble (3) comportant au moins deux composants du groupe comprenant une jante (4), un pneumatique (5) susceptible d'être monté sur ladite jante et un appui de sécurité (6) destiné à supporter au moins partiellement une bande de roulement (5a) dudit pneumatique dans des conditions de pression réduite ou nulle, ledit dispositif (1) comprenant :
a) au moins un support d'information (7, 8 ou 9) consultable automatiquement, porté par un desdits composants (4, 5 ou 6) dudit ensemble (3) et apte à fournir, quand il est consulté, au moins une donnée utilisable pour effectuer un traitement désiré sur ledit ensemble (3) ;
b) au moins un moyen due consultation et de transmission (19) apte à consulter automatiquement ledit support d'information (7, 8 ou 9) et à transmettre automatiquement ladite au moins une donnée à une unité programmable de gestion de données (17) ;
c) ladite unité programmable de gestion de données, (17) ;
d) une machine de traitement (2) apte à effectuer ledit traitement désiré sur ledit ensemble (3) sous la commande de ladite unité programmable de gestion de données (17),
**caractérisé en ce que** ladite machine de traitement est une machine de gonflage (2"), un desdits composants (4, 5 ou 6) dudit ensemble (3) portant un capteur de pression (16) en relation, du point de vue fluidique, avec la cavité du pneumatique (5) dans ledit ensemble (3) à l'étalt assemblé.

5. Système selon la revendication 4, **caractérisé en ce que** chaque composant (4, 5 ou 6) dudit ensemble (3) est muni d'un support d'information (7, 8 ou 9) consultable automatiquement et apte à fournir, quand il est consulté, des données relatives au type et aux dimensions du composant correspondant dudit ensemble.

6. Système selon la revendication 4, **caractérisé en ce que** chaque composant (4, 5 ou 6) dudit ensemble (3) est muni d'un support d'information (7, 8 ou 9) consultable automatiquement et apte à fournir, quand il est consulté, une donnée d'identification relative au composant correspondant dudit ensemble.

7. Système selon la revendication 6, **caractérisé en ce que** l'unité programmable de gestion de données (17) comporte une mémoire (18) contenant une table de correspondance comprenant les données d'identification de tous les composants (4, 5, 6) susceptibles d'être assemblés dans un même ensemble (3) et, pour chaque donnée d'identification, une pluralité de données relatives au type et aux dimensions du composant correspondant.

8. Système selon l'une quelconque des revendications 4 à 7, **caractérisé en ce que** ledit support d'information (7, 8 ou 9) comporte une étiquette lisible par l'une des voies comprenant la voie électronique (hertzienne) et la voie optique.

9. Système selon la revendication 8, **caractérisé en ce que** le moyen de consultation et de transmission (19) comprend un premier émetteur/récepteur radio (19) connecté à l'unité programmable de gestion de données (17), et un second émetteur/récepteur radio (12) inclus dans ladite étiquette (7, 8 ou 9).

10. Système selon la revendication 8, **caractérisé en ce que** le moyen de consultation et de transmission comprend un lecteur optique (19') apte à lire un code porté par ladite étiquette (7', 8' ou 9').

## Patentansprüche

1. Verfahren zur Durchführung einer Behandlung an einer Einheit (3), umfassend mindestens zwei Komponenten der Gruppe, umfassend eine Felge (4), einen Reifen (5), der geeignet ist, auf der Felge montiert zu werden, und eine Sicherheitsauflage (6), die dazu bestimmt ist, zumindest teilweise ein Laufband (5a) des Reifens unter Bedingungen eines verringerten Drucks oder eines Drucks gleich Null zu tragen, wobei das Verfahren darin besteht:
a) eine Einheit (3) zu verwenden, bei der mindestens eine der Komponenten (4, 5 oder 6) mit einem Informationsträger (7, 8 oder 9) versehen ist, der automatisch konsultierbar und geeignet ist, wenn er konsultiert wird, zumindest ein Datum zu liefern, das verwendet werden kann, um eine gewünschte Behandlung an der Einheit durchzuführen;
b) die Einheit (3) zu einer Behandlungsmaschine (2) zu führen, die geeignet ist, die gewünschte Behandlung an der Einheit unter der Steuerung einer programmierbaren Datenverwaltungseinheit (17) durchzuführen;
c) automatisch den Informationsträger (7, 8 oder 9) mindestens einer der Komponenten (4, 5 oder 6) der Einheit (3), die zu der Behandlungsmaschine (2) geführt wird, zu konsultieren und automatisch das mindestens eine Datum an die programmierbare Datenverwaltungseinheit (17) zu übertragen;
e) die gewünschte Behandlung für die Einheit (3) mit Hilfe der Behandlungsmaschine (2) zu starten und auszuführen,
wobei das Verfahren **dadurch gekennzeichnet ist, dass** es zwischen dem Schritt c) und dem Schritt e) einen Schritt d) umfasst, der darin besteht, die Behandlungsmaschine (2) auf Basis des mindestens einen übertragenen Datums einzustellen,
wobei der Schritt b) darin besteht, die Einheit (3) einer Maschine (2'') zum Aufblasen von Reifen zuzuführen und die Maschine an ein Aufblasventil (10) anzuschließen, das von einer der Komponenten der Einheit getragen wird, und der Schritt e) darin besteht, einen Aufblasvorgang durchzuführen, wobei in Schritt c) automatisch an die programmierbare Datenverwaltungseinheit (17) ein Datum übertragen wird, das es ermöglicht, einen Sollwert für den Aufblasdruck des Reifens (5) zu definieren,
und wobei in Schritt a) eine Einheit (3) verwendet wird, bei der eine der Komponenten (4, 5 oder 6) einen Drucksensor (16) umfasst, der im Hinblick auf das Fluid mit dem Hohlraum des Reifens (5) in der Einheit (3) im zusammengebauten Zustand in Verbindung steht, und in Schritt c) ferner an die programmierbare Datenverwaltungseinheit (17) der tatsächliche, vom Drucksensor (16) gemessene Druckwert übertragen wird.

2. Verfahren nach Anspruch 1, **dadurch gekennzeichnet, dass** in Schritt c) die Konsultation des Informationsträgers (7, 8 oder 9) und die Übertragung des mindestens einen Datums durch einen Funkdialog erfolgen.

3. Verfahren nach Anspruch 1, **dadurch gekennzeichnet, dass** in Schritt c) die Konsultation des Informationsträgers (7, 8 oder 9) und die Übertragung des mindestens einen Datums durch eine optische Ablesung erfolgen.

4. System zur Durchführung einer Behandlung an einer Einheit (3), umfassend mindestens zwei Komponenten aus der Gruppe, umfassend eine Felge (4), einen Reifen (5), der geeignet ist, auf der Felge montiert zu werden, und eine Sicherheitsauflage (6), die dazu bestimmt ist, zumindest teilweise ein Laufband (5a) des Reifens unter Bedingungen eines verringerten Drucks oder eines Drucks gleich Null zu tragen, wobei das System (1) umfasst:
a) mindestens einen Informationsträger (7, 8 oder 9), der automatisch konsultiert werden kann, von einer der Komponenten (4, 5 oder 6) der Einheit (3) getragen wird und geeignet ist, wenn er konsultiert wird, zumindest ein Datum zu liefern, das verwendet werden kann, um eine gewünschte Behandlung an der Einheit (3) durchzuführen;
b) mindestens ein Konsultations- und Übertragungsmittel (19), das geeignet ist, automatisch den Informationsträger (7, 8 oder 9) zu konsultieren und automatisch das mindestens eine Datum an eine programmierbare Datenverwaltungseinheit (17) zu übertragen;
c) die programmierbare Datenverwaltungseinheit (17);
d) eine Behandlungsmaschine (2), die geeignet ist, die gewünschte Behandlung an der Einheit (3) unter der Steuerung der programmierbaren Datenverwaltungseinheit (17) durchzuführen, **dadurch gekennzeichnet, dass** die Behandlungsmaschine eine Aufblasmaschine (2'') ist, wobei eine der Komponenten (4, 5 oder 6) der Einheit (3) einen Drucksensor (16) trägt, der im Hinblick auf das Fluid mit dem Hohlraum des Reifens (5) in der Einheit (3) im zusammengebauten Zustand in Verbindung steht.

5. System nach Anspruch 4, **dadurch gekennzeichnet, dass** jede Komponente (4, 5 oder 6) der Einheit (3) mit einem Informationsträger (7, 8 oder 9) versehen ist, der automatisch konsultierbar und geeignet ist, wenn er konsultiert wird, Daten zum Typ und zu den Abmessungen der entsprechenden Komponente der Einheit zu liefern.

6. System nach Anspruch 4, **dadurch gekennzeichnet, dass** jede Komponente (4, 5 oder 6) der Einheit (3) mit einem Informationsträger (7, 8 oder 9) versehen ist, der automatisch konsultierbar und geeignet ist, wenn er konsultiert wird, ein Identifikationsdatum zu der entsprechenden Komponente der Einheit zu liefern.

7. System nach Anspruch 6, **dadurch gekennzeichnet, dass** die programmierbare Datenverwaltungseinheit (17) einen Speicher (18) umfasst, der eine Übereinstimmungstabelle enthält, umfassend die Identifikationsdaten aller Komponenten (4, 5, 6), die in einer selben Einheit (3) zusammengefasst werden können, und für jedes Identifikationsdatum eine Vielzahl von Daten zum Typ und zu den Abmessungen der entsprechenden Komponente.

8. System nach einem der Ansprüche 4 bis 7, **dadurch gekennzeichnet, dass** der Informationsträger (7, 8 oder 9) ein Etikett umfasst, das von einem der Wege, umfassend den elektronischen Weg (Funk) und den optischen Weg, lesbar ist.

9. System nach Anspruch 8, **dadurch gekennzeichnet, dass** das Konsultations- und Übertragungsmittel (19) einen ersten Funksender/-empfänger (19), der an die programmierbare Datenverwaltungseinheit (17) angeschlossen ist, und einen zweiten Funksender/-empfänger (12) umfasst, der in das Etikett (7, 8 oder 9) eingeschlossen ist.

10. System nach Anspruch 8, **dadurch gekennzeichnet, dass** das Konsultations- und Übertragungsmittel einen optischen Leser (19') umfasst, der geeignet ist, einen von dem Etikett (7', 8' oder 9') getragenen Code zu lesen.

## Claims

1. Method for treating a set (3) comprising at least two components from the group comprising a rim (4), a tyre (5) that can be mounted on the said rim and a safety support (6) intended to at least partially support a tread (5a) of the said tyre under reduced-pressure or zero-pressure conditions, said method consisting:
a) in using a set (3) at least one of the said components (4, 5 or 6) of which is fitted with an information medium (7, 8 or 9) that can be consulted automatically and is able, when consulted, to provide at least one data item that can be used for carrying out a desired treatment on the said set;
b) in bringing the said set (3) to a treatment machine (2) able to carry out the said desired treatment on the said set under the control of a programmable data management unit (17);
c) in automatically consulting the information medium (7, 8 or 9) of at least one of the components (4, 5 or 6) of the said set (3) brought to the said treatment machine (2) and in automatically transmitting the said at least one data item to the said programmable data management unit (17);
e) in starting and executing the said desired treatment for the said set (3) using the said treatment machine (2),
the said method being **characterized in that** it comprises, between step c) and step e), a step d) that consists in adjusting the said treatment machine (2) on the basis of the said at least one data item transmitted,
in which step b) consists in bringing the said set (3) to a tyre inflation machine (2'') and in connecting the said machine to an inflation valve (10) borne by one of the components of the said set, and step e) consists in performing an inflation operation,
in which, in step c), a data item defining a reference value for the inflation pressure of the tyre (5) is transmitted automatically to the said programmable data management unit (17),
and in which in step a) use is made of a set (3) one of the said components (4, 5 or 6) of which comprises a pressure sensor (16) in fluidic communication with the cavity of the tyre (5) in the said set (3) in the assembled state, and in step c) the actual value of the pressure measured by the pressure sensor (16) is also transmitted to the said programmable data management unit (17).

2. Method according to Claim 1, **characterized in that** in step c) the information medium (7, 8 or 9) is consulted and the said at least one data item is transmitted using a radio wave dialogue.

3. Method according to Claim 1, **characterized in that** in step c) the information medium (7, 8 or 9) is consulted and the said at least one data item is transmitted using optical reading.

4. System for carrying out a treatment on a set (3) comprising at least two components from the group comprising a rim (4), a tyre (5) that can be mounted on the said rim and a safety support (6) intended to at least partially support a tread (5a) of the said tyre under reduced-pressure or zero-pressure conditions, the said system (1) comprising:
a) at least one information medium (7, 8 or 9) that can be consulted automatically, borne by one of the said components (4, 5 or 6) of the said set (3) and able, when consulted, to provide at least one data item that can be used for carrying out a desired treatment on the said set (3);
b) at least one consultation and transmission means (19) able to consult the said information medium (7, 8 or 9) automatically and to transmit the said at least one data item automatically to a programmable data management unit (17);
c) the said programmable data management unit (17);
d) a treatment machine (2) able to carry out the said desired treatment on the said set (3) under the control of the said programmable data management unit (17).
**characterized in that** the said treatment machine is an inflation machine (2''), one of the said components (4, 5 or 6) of the said set (3) bearing a pressure sensor (16) in fluidic communication with the cavity of the tyre (5) in the said set (3) in the assembled state.

5. System according to Claim 4, **characterized in that** each component (4, 5 or 6) of the said set (3) is provided with an information medium (7, 8 or 9) that can be consulted automatically and is able, when consulted, to provide data relating to the type and dimensions of the corresponding component of the said set.

6. System according to Claim 4, **characterized in that** each component (4, 5 or 6) of the said set (3) is provided with an information medium (7, 8 or 9) that can be consulted automatically and is able, when consulted, to provide an identification data item relating to the corresponding component of the said set.

7. System according to Claim 6, **characterized in that** the programmable data management unit (17) comprises a memory (18) containing a look-up table containing identification data for all the components (4, 5, 6) that can be assembled into one and the same set (3) and, for each identification data item, a plurality of data items relating to the type and dimensions of the corresponding component.

8. System according to any one of Claims 4 to 7, **characterized in that** the said information medium (7, 8 or 9) comprises a label that can be read by one of the following methods: electronically (radio waves) and optically.

9. System according to Claim 8, **characterized in that** the consultation and transmission means (19) comprises a first radio transmitter/receiver (19) connected to the programmable data management unit (17) and a second radio transmitter/receiver (12) included within the said label (7, 8 or 9).

10. System according to Claim 8, **characterized in that** the consultation and transmission means comprises an optical reader (19') able to read a code borne by the said label (7', 8' or 9').
